# EUROPEAN PATENT SPECIFICATION

(11) **EP 1 113 890 B1**
(45) Date of publication and mention of the grant of the patent: **10.12.2003**
(21) Application number: 99934828.7
(22) Date of filing: 16.07.1999
(51) Int. Cl.: B22C 3/00, B22C 1/02, C09D 5/02

(54) **COATING COMPOSITIONS**
BESCHICHTUNGSZUSAMMENSETZUNGEN
COMPOSITIONS D'ENDUIT

(30) Priority: 24.07.1998 GB 9816080
(43) Date of publication of application: 11.07.2001
(73) Proprietor: Foseco International Limited, Swindon, Wiltshire SN3 1RE (GB)
(72) Inventor: STOETZEL, Reinhard, D-46325 Borken (DE); STUHR, Helmut, D-46325 Borken (DE)
(74) Representative: Mosey, Stephen George
(86) International application number: GB9902151
(87) International publication number: WO00005010

(56) References cited:
- EP-A- 0 202 004
- DATABASE WPI Section Ch, Week 198809 Derwent Publications Ltd., London, GB; Class M22, AN 1988-062351 XP002122558 & SU 1 324 743 A (KALUGA MECH ENG), 23 July 1987 (1987-07-23)

## Description

This invention relates to coating compositions for use on sand cores and moulds in foundries.

It is common practice in foundries to coat sand cores and moulds with a coating of fine particle size refractory material, in order to prevent penetration of molten metal into the surface of the core or mould between the sand grains, and in the case of silica sand cores and moulds used for casting iron, to prevent reaction between the silica and iron oxide and adhesion between the sand and the cast metal, and thereby to improve the surface finish of metal cast against the cores or moulds. The coatings are usually applied in the form of a dispersion of the particulate refractory material in a liquid medium, which also contains a binder for the refractory particles. The liquid medium is usually water or an organic liquid such as isopropanol.

One of the numerous binders which are used to make foundry sand cores and moulds is an aqueous solution of sodium silicate, which is reacted with carbon dioxide gas passed through the cores or moulds so as to cure the silicate and bond the sand grains together. Cores and moulds which have been bonded with sodium silicate suffer from the disadvantage that when a water based coating is applied to the cores and moulds their surface is disintegrated and they are softened, thus reducing their strength appreciably, due to dissolution of the sodium silicate bond by the water. In some instance it is possible to use a water based coating on sodium silicate bonded cores provided the coating is dried immediately after it has been applied, but this usually involves installing a continuous drying oven in the foundry. However, in most foundries making sodium silicate bonded cores and moulds it is normal practice to coat the cores and moulds with an alcohol based coating. For safety and for environmental reasons it is desirable to replace the alcohol based coatings with water based coatings, but without the need to provide means for drying the coatings as soon as they have been applied.

The publication EP-A-0 202 004 discloses a coating composition for lining internally a pouring tube for use in metal casting comprising particulate refractory material, alkali metal silicate or phenol-fomaldehyde resol resin as a binder, water, and a liquid ester. The hardening or setting reaction of the binder is effected by means of the liquid ester.

It has now been found that a water based coating can be used successfully on carbon dioxide gassed sodium silicate bonded cores and moulds if the coating composition used contains a water soluble or water miscible additive selected from esters of polyhydric alcohols, carbonate esters and lactones and a binder that does not react with the water souluble or water miscible additive.

According to a first aspect of the present invention there is provided a coating composition comprising particulate refractory material having a particle size of predominantly less than 150 microns, a binder, water and a water soluble or water miscible additive selected from esters of polyhydric alcohols, carbonate esters and lactones, wherein the binder does not react with the water miscible or water soluble additive.

According to a second aspect, the invention provides a coating system comprising two or more separate parts to be mixed together to form a coating composition, the coating system comprising:
(a) particulate refractory material having a particle size of predominantly less than 150 microns, and a binder; and, separately,
(b) a water soluble or water miscible additive selected from esters of polyhydric alcohols, carbonate esters and lactones, wherein the binder does not react with the water miscible or water soluble additive.

The separate parts of the coating system are preferably mixed together substantially immediately before coating is to be carried out. Water is preferably added to the coating system, for example at the same time as the separate parts are mixed together.

According to a third aspect, the invention provides a method of forming a coating composition, comprising mixing together:
(a) particulate refractory material having a particle size of predominantly less than 150 microns, and a binder;
(b) a water soluble or water miscible additive selected from esters of polyhydric alcohols, carbonate esters and lactones; and
(c) water.

The particulate refractory material may be for example, one or more of zircon, alumina, chromite, silica, talc, olivine, graphite, an aluminosilicate such as calcined clay, pyrophyllite and mica.

The binder may be for example solution or dispersion of a polyacrylate a solution or dispersion of polyvinyl alcohol, dextrin, starch. In each aspect, the binder must be one which will not react with the polyhydric alcohol ester, carbonate ester or lactone. Binders which should not be used because they would react with the polyhydric alcohol ester, carbonate ester or lactone include alkali metal silicates and alkaline resol phenol-formaldehyde resins.

The water soluble or water miscible additive may be for example diacetin, triacetin, butylene glycol diacetate, propylene carbonate, or gamma-butyrolactone. Industrial grade diacetin (glycerol diacetate) is preferred.

The coating composition may also contain other components, for example, a suspension agent to prevent settling of the particulate refractory material, for example a clay such as attapulgite or bentonite or a rheological agent to improve the application properties of coating composition such as a cellulose derivative, a flocculant or a dispersant.

The coating composition (and when formed from the coating system, the water diluted coating composition) will usually contain at least 0.5%, preferably at least 1.0%, more preferably at least 2.0% especially at least 4.0% by weight of the water soluble or water miscible additive. Preferably the composition contains no more than 20.0%, more preferably no more than 15.0%, especially no more than 10.0% by weight of the water soluble or water miscible additive. The actual amount of the additive used may depend on the method of application of the coating composition to the cores or moulds.

The coating composition may be applied by any of the usual methods used in foundries, for example by brushing, dipping, spraying or overpouring. The solids content of the coating composition will depend on the method of application, but will usually be a maximum of 75% by weight.

The coating compositions of the invention are particularly advantageous when used on carbon dioxide gassed sodium silicate bonded sands. However they can also be used beneficially on other types of bonded sand which may have a tendency to soften and disintegrate when conventional water based coating compositions are applied to them. These sands include carbon dioxide gassed alkaline resol phenol-formaldehyde resin bonded sand, ester hardened sodium silicate bonded sand, and ester cured alkaline resol phenol-formaldehyde resin bonded sand.

The following Examples will serve to illustrate the invention :-

### EXAMPLE 1

Standard transverse strength test cores were produced from H 32 silica sand containing 3.5 % by weight of a proprietary sodium silicate binder, NUCLEOPON 20, available from Foseco (silica to soda molar ratio 2.4 : 1 and solids content 49 % by weight).

Three proprietary water based coating compositions available from Foseco, TERRAPAINT EP 9828 AT (composition 1), RHEOTEC 463 BW (composition 2) and HOLCOTE 90 (composition 3), were diluted to a dipping consistency with water, and 5 % by weight of commercial diacetin based on the weight of the diluted coated composition were added to produce coating compositions according to the invention.

The coating compositions were applied to the standard transverse strength test cores by dipping, and transverse strengths were measured immediately after application of the coating (while wet), one hour after drying at 120 °C for 30 minutes, and after 24 hours.

Similar tests were done on specimens which had been coated with coating composition 4, a proprietary alcohol based coating, MOLCO 6, available from Foseco.

The results obtained are shown in the table below.

| COATING COMPOSITION | TRANSVERSE STRENGTH (N/cm²) | | |
|---|---|---|---|
| | Immediately | After 1 hour | After 24 hours |
| 1 | 50 | 133 | 115 |
| 1 | 60 | 157 | 130 |
| 2 | 70 | 105 | 99 |
| 2 | 70 | 96 | 115 |
| 3 | 60 | 145 | 120 |
| 3 | 70 | 131 | 132 |
| 4 | 70 | 70 | 54 |
| 4 | 70 | 82 | 61 |

The results show that the strength of the cores after immediately coating with each of the three compositions according to the invention was comparable to that of cores which had been coated with the alcohol based coating which is of the type normally used for coating sodium silicate bonded cores. After drying for 1 hour the strength of the cores coated with the compositions according to the invention was appreciably higher than both the strength immediately after application, and the strength of the cores coated with the alcohol based coating. After 24 hours the appreciable improvement was maintained.

### EXAMPLE 2

120 kg of silica sand were mixed with 3.6% by weight based on the weight of the sand of SOLOSIL 433, a proprietary sodium silicate based binder available from Foseco of the type described in European Patent No. 0024392. Housing cores were made from the sand-binder mixture by core-shooting at a pressure 6 bars and by gassing the formed cores with carbon dioxide gas at a pressure of 5 bars for 15 seconds.

A proprietary water-based coating zircon composition RHEOTEC 300 available from Foseco containing an addition of 10% by weight of diacetin based on the weight of the composition as supplied, and having a density of 70° Baumé, was diluted with water in the proportions 150 kg of the coating composition containing the diacetin additive and 40 kg water. The diluted coating composition had a density of 42° Baumé and a viscosity of 13.5 seconds as measured on a Ford Cup No. 4.

The housing cores were dipped into the coating composition so as to produce a wet coating thickness of approximately 175 microns. The coated cores were held for a maximum of 15 minutes dried in a microwave drying unit. After drying for 10 minutes the cores were still wet and had a surface temperature of 55° to 60° C. The cores were the dried for a further 15 minutes after which time they were almost completely dry and had a surface temperature of 60° to 70° C. The cores were then inspected, and they showed no signs of having been affected adversely by the water based coating.

In contrast, in a comparison test using similar cores coated with a water-based aluminosilicate coating ARCOPAL 6423 (available from Hüttenes-Albertus) the coated cores had started to disintegrate.

## Claims

1. A coating composition, comprising particulate refractory material having a particle size of predominantly less than 150 microns, a binder, water and a water soluble or water miscible additive selected from esters of polyhydric alcohols, carbonate esters and lactones, wherein the binder is one which does not react with the water soluble or water miscible additive.

2. A coating system comprising two or more separate parts to be mixed together to form a coating composition, the coating system comprising:
(a) particulate refractory material having a particle size of predominantly less than 150 microns, and a binder; and, separately,
(b) a water soluble or water miscible additive selected from esters of polyhydric alcohols, carbonate esters and lactones, wherein the binder is one which does not react with the water soluble or water miscible additive.

3. A coating system according to Claim 2, further comprising water.

4. A method of forming a coating composition, comprising mixing together:
(a) particulate refractory material having a particle size of predominantly less than 150 microns, and a binder;
(b) a water soluble or water miscible additive selected from esters of polyhydric alcohols, carbonate esters and lactones; and
(c) water, wherein the binder is one which does not react with the water soluble or water miscible additive.

5. A composition, system or method according to any preceding claim, in which the particulate refractory material comprises one or more of: zircon, alumina, chromite, silica, talc, olivine, graphite, an aluminosilicate.

6. A composition, system or method according to any preceding claim, in which the binder comprises a solution or dispersion of a polyacrylate.

7. A composition, system or method according to any preceding claim, in which the binder comprises polyvinyl alcohol.

8. A composition, system or method according to any preceding claim, in which the binder comprises dextrin and/or starch.

9. A composition, system or method according to any preceding claim, in which the water soluble or water miscible additive comprises one or more of: diacetin, triacetin, butylene glycol diacetate, propylene carbonate, gamma-butyrolactone.

10. A composition, system or method according to any preceding claim, in which the ready for use coating composition contains at least 0.5%, preferably at least 1.0%, more preferably at least 2.0% especially at least 4.0% by weight of the water soluble or water miscible additive.

11. A composition, system or method according to any preceding claim, in which the ready for use coating composition contains no more than 20.0%, more preferably no more than 15.0%, especially no more than 10.0% by weight of the water soluble or water miscible additive.

## Patentansprüche

1. Beschichtungszusammensetzung, welche ein feuerfestes Material in Partikelform mit einer Teilchengröße von überwiegend kleiner als 150 Mikrometer, ein Bindemittel, Wasser und einen wasserlöslichen oder einem mit Wasser vermischbaren Zusatzstoff umfasst, welch letzterer ausgewählt wird aus den Estern der polyhydrischen Alkohole, den Karbonatestern und den Laktonen, wobei das Bindemittel ein solches ist, welches nicht mit dem wasserlöslichen oder dem mit Wasser vermischbaren Zusatzstoff reagiert.

2. Beschichtungssystem, welches zwei oder mehre separate Bestandteile umfasst, welche dazu bestimmt sind zusammengemischt zu werden, um eine Beschichtungszusammensetzung zu bilden, wobei dieses Beschichtungssystem umfasst:
(a) ein feuerfestes Material in Partikelform mit einer Teilchengröße von überwiegend kleiner als 150 Mikrometer und ein Bindemittel; und, getrennt davon,
(b) einen wasserlöslichen oder mit Wasser vermischbaren Zusatzstoff, welcher ausgewählt wird aus den Estern der polyhydrischen Alkohole, den Karbonatestern und den Laktonen,
wobei das Bindemittel ein solches ist, welches nicht mit dem wasserlöslichen oder dem mit Wasser vermischbaren Zusatzstoff reagiert.

3. Beschichtungssystem gemäß Anspruch 2, welches ferner Wasser enthält.

4. Verfahren zur Bildung einer Beschichtungszusammensetzung mit einem Schritt des Zusammenmischens von:
(a) einem feuerfesten Material in Partikelform mit einer Teilchengröße von überwiegend kleiner als 150 Mikrometer und aus einem Bindemittel;
(b) einem wasserlöslichen oder einem mit Wasser vermischbaren Zusatzstoff, welcher ausgewählt wird aus den Estern der polyhydrischen Alkohole, den Karbonatestern und aus den Laktonen; und
(c) Wasser,
wobei das Bindungsmittel ein solches ist, welches nicht mit dem wasserlöslichen oder dem mit Wasser vermischbaren Zusatzstoff reagiert.

5. Zusammensetzung, System oder Verfahren gemäß irgendeinem der vorhergehenden Ansprüche, bei welchen das feuerfeste Material in Partikelform einen oder mehrere der Bestandteile Zirkon, Aluminiumoxyd, Chromit, Siliziumdioxid, Talk, Olivin, Graphit, ein Aluminiumsilikat umfasst.

6. Zusammensetzung, System oder Verfahren gemäß irgendeinem der vorhergehenden Ansprüche, bei welchen das Bindemittel eine Lösung oder eine Dispersion eines Polyacrylats umfasst.

7. Zusammensetzung, System oder Verfahren gemäß irgendeinem der vorhergehenden Ansprüche, bei welchen das Bindemittel einen Polyvinylalkohol umfasst.

8. Zusammensetzung, System oder Verfahren gemäß irgendeinem der vorhergehenden Ansprüche, bei welchen das Bindemittel Dextrin und/oder Stärke umfasst.

9. Zusammensetzung, System oder Verfahren gemäß irgendeinem der vorhergehenden Ansprüche, bei welchen der wasserlösliche oder der mit Wasser vermischbare Zusatzstoff einen oder mehrere der Bestandteile Diacetin, Triacetin, Butylenglycoldiacetat, Propylenkarbonat, Gamma-butyrolacton umfasst.

10. Zusammensetzung, System oder Verfahren gemäß irgendeinem der vorhergehenden Ansprüche, bei welchen die gebrauchsfertige Beschichtungszusammensetzung mindestens 0,5 Gew.-% des wasserlöslichen oder des mit Wasser vermischbaren Zusatzstoffes enthält, vorzugsweise mindestens 1,0 Gew.-%, mit einem noch größeren Vorzug mindestens 2,0 Gew.-%, insbesondere aber mindestens 4,0 Gew.-%.

11. Zusammensetzung, System oder Verfahren gemäß irgendeinem der vorhergehenden Ansprüche, bei welchen die gebrauchsfertige Beschichtungszusammensetzung nicht mehr als 20,0 Gew.-% des wasserlöslichen oder des mit Wasser vermischbaren Zusatzstoffes enthält, mit einem größeren Vorzug nicht mehr als 15,0 Gew.-%, insbesondere aber nicht mehr als 10,0 Gew.-%.

## Revendications

1. Composition d'enduit, comprenant un matériau réfractaire particulaire possédant une taille de particules en prédominance inférieure à 150 microns, un liant, de l'eau et un additif soluble dans l'eau ou miscible avec l'eau choisi parmi des esters d'alcools polyhydriques, des esters de carbonates et des lactones, dans laquelle le liant est un composé qui ne réagit pas avec l'additif soluble dans l'eau ou miscible avec l'eau.

2. Système d'enduit comprenant deux parties séparées ou plus à mélanger ensemble pour former une composition d'enduit, le système d'enduit comprenant:
(a) un matériau réfractaire particulaire possédant une taille de particules en prédominance inférieure à 150 microns et un liant; et, séparément,
(b) un additif soluble dans l'eau ou miscible avec l'eau choisi parmi des esters d'alcools polyhydriques, des esters de carbonates et des lactones,
dans lequel le liant est un composé qui ne réagit pas avec l'additif soluble dans l'eau ou miscible avec l'eau.

3. Système d'enduit suivant la revendication 2, comprenant en outre de l'eau.

4. Procédé pour la formation d'une composition d'enduit, comprenant le mélange ensemble:
(a) d'un matériau réfractaire particulaire possédant une taille de particules en prédominance inférieure à 150 microns et d'un liant;
(b) d'un additif soluble dans l'eau ou miscible avec l'eau choisi parmi des esters d'alcools polyhydriques, des esters de carbonates et des lactones; et
(c) d'eau,
dans lequel le liant est un composé qui ne réagit pas avec l'additif soluble dans l'eau ou miscible avec l'eau.

5. Composition, système ou procédé suivant l'une quelconque des revendications précédentes, dans lesquels le matériau réfractaire particulaire comprend un ou plusieurs composés parmi: zircone, alumine, chromite, silice, talc, olivine, graphite, un aluminosilicate.

6. Composition, système ou procédé suivant l'une quelconque des revendications précédentes, dans lesquels le liant comprend une solution ou une dispersion d'un polyacrylate.

7. Composition, système ou procédé suivant l'une quelconque des revendications précédentes, dans lesquels le liant comprend un alcool de polyvinyle.

8. Composition, système ou procédé suivant l'une quelconque des revendications précédentes, dans lesquels le liant comprend de la dextrine et/ou de l'amidon.

9. Composition, système ou procédé suivant l'une quelconque des revendications précédentes, dans lesquels l'additif soluble dans l'eau ou miscible avec l'eau comprenant un ou plusieurs composés parmi: diacétine, triacétine, diacétate de butylèneglycol, carbonate de propylène, gamma-butyrolactone.

10. Composition, système ou procédé suivant l'une quelconque des revendications précédentes, dans lesquels la composition d'enduit prête à l'emploi contient au moins 0,5%, de préférence au moins 1,0%, plus préférablement au moins 2,0%, spécialement au moins 4,0% en poids de l'additif soluble dans l'eau ou miscible avec l'eau.

11. Composition, système ou procédé suivant l'une quelconque des revendications précédentes, dans lesquels la composition d'enduit prête à l'emploi ne contient pas plus de 20,0%, plus préférablement pas plus de 15,0%, spécialement pas plus de 10,0% en poids de l'additif soluble dans l'eau ou miscible avec l'eau.
